# EUROPÄISCHE PATENTSCHRIFT

(11) **EP 2 895 949 B1**
(45) Veröffentlichungstag und Bekanntmachung des Hinweises auf die Patenterteilung: **22.03.2023**
(21) Anmeldenummer: 13756857.2
(22) Anmeldetag: 28.08.2013
(51) Int. Cl.: G06F 3/0488

(54) **BERÜHRUNGSEINGABEN ÜBER SCHWELLEN AUF BERÜHRUNGSEMPFINDLICHEN ANZEIGEN**
TOUCH ENTRIES VIA RIDGES/DEPRESSIONS ON TOUCH-SENSITIVE DISPLAYS
ENTRÉES PAR EFFLEUREMENT PAR L'INTERMÉDIAIRE DE SEUILS SUR DES ÉCRANS TACTILES

(30) Priorität: 13.09.2012 DE 102012216287
(43) Veröffentlichungstag der Anmeldung: 22.07.2015
(73) Patentinhaber: Bayerische Motoren Werke Aktiengesellschaft, 80809 München (DE)
(72) Erfinder: RÜMELIN, Sonja, 80687 München (DE)
(86) Internationale Anmeldenummer: PCT/EP2013/067770
(87) Internationale Veröffentlichungsnummer: WO 2014/040856

(56) Entgegenhaltungen:
- EP-A1- 2 867 762
- DE-A1-102006 037 156
- US-A1- 2009 273 563
- US-A1- 2012 223 914
- ALEXANDER MERTENS ET AL: "Design pattern TRABING", PROCEEDINGS OF THE 2ND ACM SIGCHI SYMPOSIUM ON ENGINEERING INTERACTIVE COMPUTING SYSTEMS, EICS '10, 1. Januar 2010 (2010-01-01), Seite 267, XP055051992, New York, New York, USA DOI: 10.1145/1822018.1822060 ISBN: 978-1-45-030083-4

## Beschreibung

Die Erfindung betrifft Verfahren zum Bereitstellen einer Eingabemöglichkeit auf einer berührungsempfindlichen Anzeigenoberfläche und entsprechend eingerichtete Vorrichtungen.

Die Bedienung von berührungsempfindlichen Oberflächen erfordert oft eine visuelle Kontrolle oder Steuerung der Eingabe. Dies gilt für Touch Pads ebenso wie für Touch Screens. Im ersten Fall erfolgt die Kontrolle typischerweise über eine gesonderte Anzeige, die einen Cursor anzeigt, der die Bewegung des Fingers auf dem Touch Pad abbildet. Im zweiten Fall erfolgt die Steuerung direkt durch einen Vergleich der Position eines Fingers einer Hand eines Benutzers und den graphischen Elementen der Anzeige des Touch Screens durch den Benutzer.

In manchen Situationen wäre jedoch eine Blindbedienung ohne visuelle Kontrolle oder Steuerung der Eingabe auf berührungsempfindlichen Oberflächen wünschenswert. Eine dieser Situationen ist das Führen eines Kraftfahrzeugs. In dieser Situation sollte der Blick des Fahrers möglichst nicht vom Verkehrsgeschehen abgewendet werden, um Unfälle zu vermeiden.

Aufgabe an den Fachmann ist es deshalb ein Verfahren bereit zu stellen, mit dem ohne visuelle Kontrolle oder Steuerung Eingaben in eine berührungsempfindliche Oberfläche bereit gestellt werden können.

Dokument US 2009/0273563 A1 offenbart programmierbare taktile Touch-Screen Anzeigen. Diese umfassen beispielswiese Rillen und Rinnen, entlang derer ein Benutzer einen Finger gleitet, um die Temperatur einer Fahrzeuginnenraumheizung oder Tageszeiten für einen Aktienchart einzustellen.

Dokument DE 10 2006 037 156 A1 offenbart eine interaktive Bedienvorrichtung und Verfahren zum Betreiben der Vorrichtung. Informationen umfassend Bedienelemente werden auf der Bedienvorrichtung angezeigt und mittels Sensorinformationen über ein Körperteil werden Bedienabsichten für ein Bedienelement ermittelt. Abhängig von den ermittelten Bedienabsichten werden die dargestellten Informationen angepasst, so dass das Bedienelement optimiert dargestellt wird.

Dokument EP 2 867 762 A1 offenbart ein Verfahren zum Empfangen einer Eingabe auf einem berührungsempfindlichen Feld. Dabei wird die gewünschte Funktion durch überqueren einer Schwelle ausgelöst.

Die Aufgabe wird durch ein Verfahren nach Anspruch 1 und eine Vorrichtung nach Anspruch 6 gelöst. Vorteilhafte Ausführungsformen sind in den abhängigen Ansprüchen definiert.

Offenbart wird ein Verfahren zum Bereitstellen einer Eingabe auf einer berührungsempfindlichen Anzeigenoberfläche, wobei die Anzeigenoberfläche dazu eingerichtet ist, eine Darstellung anzuzeigen, wobei die Anzeigenoberfläche eine Schwelle umfasst, und wobei die Anzeigenoberfläche dazu geeignet ist, auch in der Schwelle zumindest einen Teil der Darstellung anzuzeigen, umfassend: Erfassen einer die Schwelle überquerenden Bewegung eines Fingers eines Benutzers; Aktivieren einer Funktion in Antwort auf das Erfassen.

Auf diese Weise wird dem Benutzer eine Blindbedienung ermöglicht. Durch die Möglichkeit eine Eingabe an einer physikalischen Struktur, der Schwelle, bereit zu stellen, kann der Benutzer seinen Tastsinn einsetzen. Folglich ist es nicht mehr nötig, den Blick auf die berührungsempfindliche Oberfläche zu richten.

Eine Schwelle kann zwei Seitenwände, die je gerade, konkav oder konvex gebogen sein können umfassen. Die Seitenwände können auch durch eine Kombination von geraden, konkaven oder konvexen Abschnitten gebildet werden. Die Schwelle kann derart ausgestaltet sein, dass sie sich für einen Benutzer wie eine Kante anfühlt. Weiterhin kann die Schwelle über die Oberfläche hinausstehen oder in sie hineinragen. Hierin wird auch ein Knick in der Oberfläche, eventuell mit spitzem oder stumpfem Winkel, als Schwelle verstanden.

Eine berührungsempfindliche Anzeigenoberfläche ist dazu eingerichtet eine Berührung der Oberfläche und den Ort der Berührung zu erfassen. Diese Fähigkeiten können mithilfe von auf kapazitiven, resistiven, optischen oder Infrarot-Messungen basierenden, oder anderen im Stand der Technik bekannten Vorrichtungen und Verfahren realisiert werden. Insbesondere ist die berührungsempfindliche Anzeigenoberfläche ein Touch Screen. Gleichzeitig ist die Anzeigenoberfläche dazu ausgebildet eine Darstellung anzuzeigen, dies kann mittels Rückprojektion, oder mithilfe von flexiblen Displays, beispielsweise OLEDs, oder anderen aus dem Stand der Technik bekannten Systemen erfolgen.

In einer anderen Weiterbildung umfasst das Verfahren das Anzeigen einer Markierungsfläche in der Nähe oder angrenzend zur Schwelle oder zumindest teilweise in der Schwelle; Zuordnen eines Abschnitts der Schwelle zu der Markierungsfläche, insbesondere basierend auf der räumlichen Entfernung von dem von der Anzeige der Markierungsfläche eingenommenen Bereich und im Fall einer in der Schwelle angezeigten Markierungsfläche basierend auf dem Abschnitt der Schwelle, in dem die Markierungsfläche zumindest teilweise angezeigt wird; Erfassen einer die Schwelle überquerenden Bewegung an einem der Markierungsfläche zugeordneten Abschnitt der Schwelle; Aktivieren einer der Markierungsfläche zugeordneten Funktion. Dem Benutzer wird somit die Möglichkeit geboten, visuell zu erfassen, welche Funktion durch die Überquerung der Schwelle ausgelöst wird. Diese wird ihm anhand der Markierungsfläche anzeigt. Vorzugsweise umfasst die Markierungsfläche Piktogramme oder textbasierte Erläuterungen der ihr zugeordneten Funktion. Durch die Anzeige der Markierungsfläche in der Nähe oder angrenzend zur Schwelle oder sogar teilweise in der Schwelle wird dem Benutzer der Zusammenhang zwischen der Schwelle und der Aktivierung durch Überqueren der Schwelle verdeutlicht. Es kommt zu weniger Fehlinterpretationen und Fehleingaben.

In einer Weiterbildung umfasst das Verfahren das Erfassen einer Berührung auf oder angrenzend zu dem Abschnitt der Schwelle, der der Markierungsfläche zugeordnet ist; Anzeigen eines Hinweises bezüglich der Markierungsfläche, insbesondere die Markierungsfläche selbst, auf einer weiteren Anzeige oder in einem die Schwelle nicht umfassenden Abschnitt der Anzeigenoberfläche. Dem Benutzer kann so an einem für seine Blickabwendung vom Verkehrsgeschehen besser gelegenen Ort angezeigt werden, dass und gegebenenfalls welche Markierungsfläche aktiviert werden würde, wenn er die Schwelle von der Stelle aus, wo sich sein Finger befindet, überqueren würde. Dies ist insbesondere dann vorteilhaft, wenn dem Benutzer nicht nur eine aktivierbare Funktion angeboten wird, sondern mehrere Funktionen vorgesehen sind, die durch die Überquerung der Schwelle an jeweils unterschiedlichen Stellen aktivierbar sind. Mit anderen Worten: Das Verfahren umfasst das Anzeigen mehrerer Markierungsflächen, denen jeweils Abschnitte der Schwelle zugordnet sind. Berührt der Benutzer mit seinem Finger einen Ort in der Nähe des jeweils zugeordneten Abschnitts oder den Abschnitt der Schwelle, erhält er eine Vorschau der Markierungsfläche auf einer weiteren Anzeige. Mithilfe dieser Information kann der Benutzer dann entscheiden, ob er die Schwelle ausgehend von der Stelle der Berührung überquert und die entsprechende Funktion aktiviert. Die Anzeige kann so angeordnet werden, dass die Beobachtung des Verkehrsgeschehens durch den Benutzer nicht wesentlich beeinträchtigt wird, beispielsweise in einem Head-up Display oder einem Head-mounted Display. Der Finger des Benutzers kann entlang der Schwelle geführt werden und der Benutzer kann entlang der Schwelle mit seinem Finger gleiten. Bei dieser Bewegung werden ihm nach und nach die jeweils dem gerade berührten Abschnitt der Schwelle zugeordneten Markierungsflächen angezeigt. Erreicht der Benutzer Orte für die gewünschte Markierungsfläche kann er diese aktivieren. Für dieses Auswählen und Aktivieren der Markierungsfläche muss der Benutzer seinen Blick nicht auf die Schwelle richten, weil er hierzu seinen Tastsinn verwenden kann.

In einer Weiterbildung umfasst das Verfahren das Erfassen einer Berührung der Anzeigenoberfläche in der Nähe oder an der Schwelle; Anzeigen eines Hinweises in Antwort auf das Erfassen der Berührung der Anzeigenoberfläche in der Nähe oder an der Schwelle, und/oder auf einem Head-up Display oder einem Head-mounted Display. Auf diese Weise erhält der Benutzer eine Rückmeldung, wann sein Finger die Schwelle berührt auch auf visuelle Art. Auf diese Weise erhält der Benutzer zusätzliches Feedback, dass er die Schwelle berührt und erhält auf diese Weise eine Bestätigung, dass das System funktioniert. Der Hinweis kann so ausgestaltet sein, dass der Benutzer ihn aus einem Augenwinkel erkennen kann und seinen Blick nicht dauerhaft der Schwelle oder den Bereichen der Oberfläche zuwenden muss. Der Hinweis kann eine Farbänderung sein. In einer Variante wird der Hinweis auf einer weiteren Anzeige, insbesondere einem Head-up Display oder einem Head-mounted Display angezeigt. Der Hinweis kann das Einfärben eines die Schwelle umgebenden Bereiches umfassen.

Erfassen einer Berührung der Anzeigenoberfläche in der Nähe oder an der Schwelle; Anzeigen eines vergrößerten Ausschnittes der Darstellung der Anzeigenoberfläche um den Ort der Berührung herum, insbesondere mit einem Hinweis auf den Ort der Berührung; Wobei der vergrößerte Ausschnitt insbesondere in einem die Schwelle nicht umfassenden Bereich der Anzeigenoberfläche, auf einem Head-up Display oder einem Head-mounted Display angezeigt wird. Auf diese Weise wird dem Benutzer an einer anderen Stelle, beispielsweise auf einem Head-up Display, ein relevanter Ausschnitt seiner Berührung auf der Anzeigenoberfläche angezeigt. Eine zu starke Blickabwendung vom Verkehrsgeschehen wird hiermit vermieden. Auch kann dieser Ausschnitt dazu dienen, den Abschnitt der Schwelle zu identifizieren, der der gewünschten zu aktivierenden Funktion zugewiesen ist.

Offenbart wird ebenfalls eine Vorrichtung, umfassend: Eine berührungsempfindliche Oberfläche; wobei die Oberfläche eine Schwelle umfasst, die so angeordnet ist, dass sich zu beiden Seiten der Schwelle je ein Bereich der Oberfläche befindet; elektronische Verarbeitungsmittel; wobei die Vorrichtung dazu eingerichtet ist, eines der oben offenbarten Verfahren auszuführen. Die elektronischen Verarbeitungsmittel können ein durch Programme einrichtbarer Computer sein.

### KURZE BESCHREIBUNG DER ZEICHNUNG

Fig. 1 zeigt schematisch eine berührungsempfindliche Anzeigenoberfläche mit Schwelle im Querschnitt gemäß einem Ausführungsbeispiel.
Fig. 2 zeigt schematisch die berührungsempfindliche Anzeigenoberfläche mit Schwelle in einer Draufsicht gemäß dem Ausführungsbeispiel der Fig. 1.
Fig. 3 zeigt schematisch die berührungsempfindliche Anzeigenoberfläche gemäß Fig. 1 und ein Head-up Display in Benutzung gemäß einem Ausführungsbeispiel.
Fig. 4 zeigt schematisch eine weitere berührungsempfindliche Anzeigenoberfläche gemäß einem weiteren Ausführungsbeispiel.

Gleiche Bezugszeichen beziehen sich auf sich entsprechende Elemente über die Figuren hinweg.

### DETAILLIERTE BESCHREIBUNG DES AUSFÜHRUNGSBEISPIELS

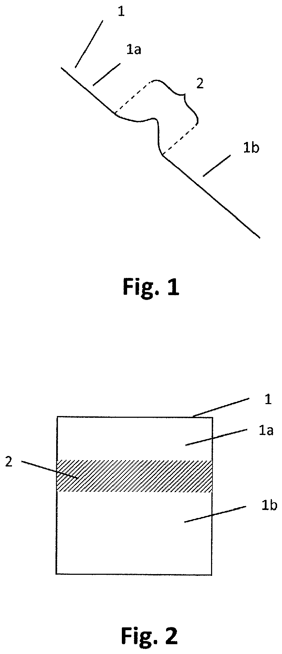

Fig. 1 zeigt eine berührungsempfindliche Anzeigenoberfläche 1 mit Schwelle 2 im Querschnitt gemäß einem Ausführungsbeispiel. Die Schwelle 2 steht über die Oberfläche 1 hervor, hat einen gleichbleibenden Querschnitt über die Breite der Oberfläche 1 hinweg und kann gut von einem Benutzer ertastet werden. In Fig. 2 wird dieselbe berührungsempfindliche Oberfläche 1 mit der Schwelle 2 in einer Draufsicht gezeigt. Der schraffierte Bereich kennzeichnet den Bereich der Schwelle 2. Die Schwelle 2 trennt einen oberen 1a und einen unteren 1b Bereich der Oberfläche, so dass sich ein Bereich der Oberfläche 1a auf einer Seite der Schwelle 2, und ein Bereich der Oberfläche 1b auf der anderen Seite der Schwelle 2 befindet. Die Oberfläche 1 ist dazu eingerichtet Berührungen eines Benutzers mit seinem Finger zu erfassen. Gleichzeitig ist die Oberfläche 1 dazu eingerichtet, beliebige Graphiken und Text anzuzeigen. Die Anzeige der Graphiken und des Textes kann durch Rückprojektion, oder mithilfe von flexiblen Displays, beispielsweise OLEDs, erfolgen.

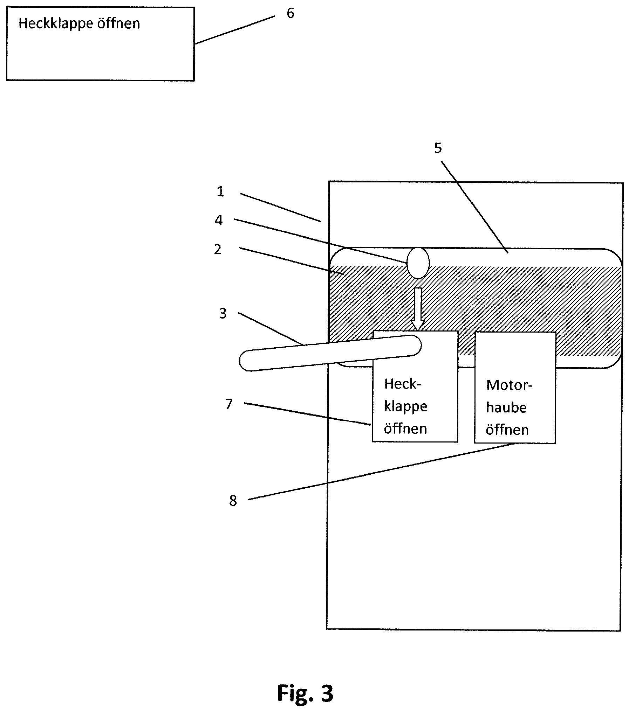

Fig. 3 zeigt die berührungsempfindliche Anzeigenoberfläche 1 in Benutzung. Die Anzeigenoberfläche 1 ist in der Mittelkonsole eines Kraftfahrzeugs, insbesondere PKWs, verbaut und kann dort vom Fahrer (mit anderen Worten: der Benutzer) leicht erreicht werden. Die Anzeigenoberfläche 1 bietet die Möglichkeit mehrere Funktionen einzustellen, hier das Öffnen der Motorhaube und das Öffnen der Heckklappe. Dazu sind zwei Markierungsflächen 7 und 8 angezeigt, die teilweise in der Schwelle angezeigt werden. Möchte der Benutzer nun die Heckklappe öffnen, ertastet der Benutzer mit seinem Finger die obere Seite der Schwelle 2, also die Seite, die an den oberen Bereich (Bezugsziffer 1a in Fig. 1 und 2) grenzt. Die Schwelle 2 wird daraufhin in einem Bereich 5 einfarbig markiert, um dem Benutzer das Erkennen der Berührung der Schwelle 2 und die korrekte Funktionsweise anzuzeigen. Dies kann der Benutzer aus dem Augenwinkel oder bei Unsicherheit durch kurze Blicken feststellen. Der Benutzer kann dann mithilfe seines Tastsinns seinen Finger entlang der Schwelle 2 führen. Je nachdem an welchem Abschnitt der Schwelle sich der Finger des Benutzers befindet wird dem Benutzer im Head-up Display 6 ein Hinweis auf die Markierungsfläche 7, 8 gegeben, dem der berührte Abschnitt der Schwelle 2 zugeordnet ist. Auf diese Weise erhält der Benutzer eine Vorschau der Funktion, die er von der Berührungsstelle aus durch Überqueren der Schwelle 2 aktivieren kann. Im vorliegenden Beispiel der Fig. 3 wird dem Benutzer der textbasierte Hinweis "Heccklappe öffnen" im Head-up Display 6 angezeigt, wenn der Finger die Schwelle am Ort 4 berührt, weil der Ort 4 im Abschnitt der Schwelle 2 liegt, der der Markierungsfläche 7 zugeordnet ist. Entscheidet sich der Benutzer nun die Schwelle 2 mit dem Finger 3 zu überqueren, wie durch den Pfeil in Fig. 3 angedeutet, so wird die Funktion "Heckklappe öffnen" ausgeführt.

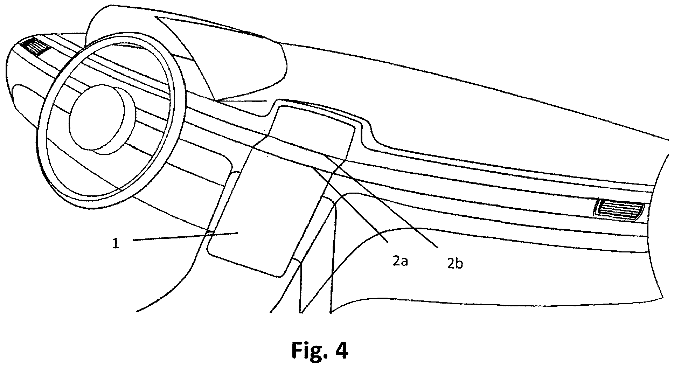

Fig. 4 zeigt schematisch eine weitere berührungsempfindliche Oberfläche 1 gemäß einem weiteren Ausführungsbeispiel. Diese berührungsempfindliche Oberfläche 1 ist in ein Armaturenbrett eines Kraftfahrzeugs bündig eingebaut. Die berührungsempfindliche Oberfläche folgt der Kontur des Armaturenbrettes. Dadurch entstehen zwei Schwellen 2a und 2b, die auch als Kanten bezeichnet werden können und in den hier vorgestellten Verfahren verwendet werden können.

## Patentansprüche

1. Verfahren zum Bereitstellen einer Eingabemöglichkeit auf einer berührungsempfindlichen Anzeigenoberfläche (1), wobei die Anzeigenoberfläche (1) dazu eingerichtet ist, eine Darstellung (7, 8) anzuzeigen, wobei die Anzeigenoberfläche (1) eine Schwelle (2) umfasst, und wobei die Anzeigenoberfläche (1) dazu geeignet ist, auch in der Schwelle (2) zumindest einen Teil der Darstellung (7, 8) anzuzeigen, umfassend:
Anzeigen mehrerer Markierungsflächen (7, 8) in der Nähe oder angrenzend zur Schwelle (2) oder zumindest teilweise in der Schwelle (2);
Zuordnen je eines Abschnitts der Schwelle (2) zu jeder Markierungsfläche (7, 8), insbesondere basierend auf der räumlichen Entfernung von dem von der Anzeige der Markierungsfläche (7, 8) eingenommenen Bereich und im Fall einer in der Schwelle (2) angezeigten Markierungsfläche (7, 8) basierend auf dem Bereich der Schwelle (2), in dem die Markierungsfläche (7, 8) zumindest teilweise angezeigt wird;
Erfassen einer die Schwelle (2) überquerenden Bewegung eines Fingers (3) eines Benutzers an einem einer der Markierungsflächen (7, 8) zugeordneten Abschnitt der Schwelle (2);
Aktivieren einer der Markierungsfläche (7, 8) zugeordneten Funktion in Antwort auf das Erfassen.

2. Verfahren nach Anspruch 1, ferner umfassend:
Erfassen einer Berührung auf oder angrenzend zu dem Abschnitt der Schwelle (2), der einer der Markierungsflächen zugeordnet ist;
Anzeigen eines Hinweises bezüglich der Markierungsfläche (7, 8), insbesondere die Markierungsfläche (7, 8) selbst, auf einer weiteren Anzeige (6) oder in einem die Schwelle (2) nicht umfassenden Bereich der Anzeigenoberfläche (1).

3. Verfahren nach einem der vorhergehenden Ansprüche, ferner umfassend:
Erfassen einer Berührung der Anzeigenoberfläche (1) in der Nähe oder an der Schwelle (2);
Anzeigen eines Hinweises in Antwort auf das Erfassen der Berührung der Anzeigenoberfläche (1) in der Nähe oder an der Schwelle (2), und/oder auf einem Head-up Display (6) oder einem Head-mounted Display.

4. Verfahren nach Anspruch 3, wobei der Hinweis das Einfärben eines die Schwelle (2) umgebenden Bereiches (6) umfasst.

5. Verfahren nach einem der vorhergehenden Ansprüche, ferner umfassend:
Erfassen einer Berührung der Anzeigenoberfläche (1) in der Nähe oder an der Schwelle (2);
Anzeigen eines vergrößerten Ausschnittes der Darstellung der Anzeigenoberfläche (1) um den Ort der Berührung (4) herum, insbesondere mit einem Hinweis auf den Ort der Berührung;
Wobei der vergrößerte Ausschnitt insbesondere in einem die Schwelle (2) nicht umfassenden Bereich der Anzeigenoberfläche (1), auf einem Head-up Display (6) oder einem Head-mounted Display angezeigt wird.

6. Vorrichtung, umfassend:
Eine berührungsempfindliche Anzeigenoberfläche (1); wobei die Anzeigenoberfläche (1) dazu eingerichtet ist, eine Darstellung (7, 8) anzuzeigen, wobei die Anzeigenoberfläche (1) eine Schwelle (2) umfasst, die so angeordnet ist, dass sich zu beiden Seiten der Schwelle (2) je ein Bereich der Anzeigenoberfläche (1) befindet;
wobei die Anzeigenoberfläche (1) dazu geeignet ist, auch in der Schwelle (2) zumindest einen Teil einer Darstellung anzuzeigen;
elektronische Verarbeitungsmittel;
wobei die Vorrichtung dazu eingerichtet ist, ein Verfahren nach einem der vorhergehenden Ansprüche auszuführen.

## Claims

1. Method for providing an input option on a touch-sensitive display surface (1), wherein the display surface (1) is configured to display an image (7, 8), wherein the display surface (1) comprises a ridge/depression (2), and wherein the display surface (1) is suitable for displaying at least part of the image (7, 8) also on/in the ridge/depression (2), comprising:
displaying a plurality of marking areas (7, 8) near or adjacent to the ridge/depression (2) or at least partially on/in the ridge/depression (2);
assigning in each case a section of the ridge/depression (2) to each marking area (7, 8), in particular based on the spatial distance from the region taken up by the display of the marking area (7, 8) and, in the case of a marking area (7, 8) displayed on/in the ridge/depression (2), based on the region of the ridge/depression (2) in which the marking area (7, 8) is at least partially displayed;
detecting a movement of a finger (3) of a user passing over the ridge/depression (2) at a section of the ridge/depression (2) assigned to one of the marking areas (7, 8);
activating a function assigned to the marking area (7, 8) in response to the detection.

2. Method according to Claim 1, further comprising:
detecting a touch on or adjacent to the section of the ridge/depression (2) assigned to one of the marking areas;
displaying an instruction with regard to the marking area (7, 8), in particular the marking area (7, 8) itself, on a further display (6) or in a region of the display surface (1) not comprising the ridge/depression (2).

3. Method according to either of the preceding claims, further comprising:
detecting a touch of the display surface (1) near to or on the ridge/depression (2);
displaying an instruction, in response to the detection of the touch of the display surface (1), near to or on the ridge/depression (2) and/or on a head-up display (6) or a head-mounted display.

4. Method according to Claim 3, wherein the instruction comprises the colouring of a region (6) surrounding the ridge/depression (2).

5. Method according to one of the preceding claims, further comprising:
detecting a touch of the display surface (1) near to or on the ridge/depression (2);
displaying an enlarged detail of the image of the display surface (1) around the location of the touch (4), in particular with an indication of the location of the touch;
wherein the enlarged detail, in particular in a region of the display surface (1) not comprising the ridge/depression (2), is displayed on a head-up display (6) or a head-mounted display.

6. Apparatus, comprising:
a touch-sensitive display surface (1); wherein the display surface (1) is configured to display an image (7, 8), wherein the display surface (1) comprises a ridge/depression (2) which is arranged such that a region of the display surface (1) is situated to each of the two sides of the ridge/depression (2); wherein the display surface (1) is suitable for displaying at least part of an image also on/in the ridge/depression (2);
electronic processing means;
wherein the apparatus is configured to perform a method according to one of the preceding claims.

## Revendications

1. Procédé permettant de fournir une possibilité d'entrée sur une surface d'affichage tactile (1), la surface d'affichage (1) étant conçue pour afficher une représentation (7, 8), dans lequel la surface d'affichage (1) comprend un seuil (2), et dans lequel la surface d'affichage (1) est adaptée pour afficher également dans le seuil (2) au moins une partie de la représentation (7, 8), comprenant les étapes consistant à :
afficher plusieurs surfaces de marquage (7, 8) à proximité du ou de manière adjacente au seuil (2) ou du moins partiellement dans le seuil (2) ;
associer respectivement une partie du seuil (2) à chaque surface de marquage (7, 8), en particulier sur la base de la distance physique par rapport à la zone occupée par l'affichage de la surface de marquage (7, 8), et dans le cas d'une surface de marquage (7, 8) affichée dans le seuil (2), sur la base de la zone du seuil (2) dans laquelle la surface de marquage (7, 8) est affichée au moins partiellement ;
détecter un mouvement d'un doigt (3) d'un utilisateur, franchissant le seuil (2) au niveau d'une partie du seuil (2) associée à l'une des surfaces de marquage (7, 8) ;
activer une fonction associée à la surface de marquage (7, 8) en réponse à la détection.

2. Procédé selon la revendication 1, comprenant en outre les étapes consistant à :
détecter un contact sur ou de manière adjacente à la partie du seuil (2) qui est associée à l'une des surfaces de marquage ;
afficher une indication concernant la surface de marquage (7, 8), en particulier la surface de marquage (7, 8) en tant que telle, sur un autre affichage (6) ou dans une zone de la surface d'affichage (1) ne comprenant pas le seuil (2).

3. Procédé selon l'une quelconque des revendications précédentes, comprenant en outre les étapes consistant à :
détecter un contact avec la surface d'affichage (1) à proximité ou au niveau du seuil (2) ;
afficher une indication en réponse à la détection du contact avec la surface d'affichage (1) à proximité ou au niveau du seuil et/ou sur un affichage tête haute (6) ou un casque de visualisation.

4. Procédé selon la revendication 3, dans lequel l'indication comprend la coloration d'une zone (6) entourant le seuil (2).

5. Procédé selon l'une quelconque des revendications précédentes, comprenant en outre les étapes consistant à :
détecter un contact avec la surface d'affichage (1) à proximité ou au niveau du seuil (2) ;
afficher une partie agrandie de la représentation de la surface d'affichage (1) autour de l'emplacement du contact (4), en particulier avec une indication de l'emplacement du contact ;
dans lequel la partie agrandie est affichée en particulier dans une zone de la surface d'affichage (1) ne comprenant pas le seuil (2) sur un affichage tête haute (6) ou un casque de visualisation.

6. Dispositif, comprenant :
une surface d'affichage tactile (1) ; dans lequel la surface d'affichage (1) est conçue pour afficher une représentation (7, 8),
dans lequel la surface d'affichage (1) comprend un seuil (2) qui est disposé de telle sorte que respectivement une zone de la surface d'affichage (1) se trouve des deux côtés du seuil (2) ;
dans lequel la surface d'affichage (1) est adaptée pour afficher même dans le seuil (2) au moins une partie d'une représentation ;
des moyens de traitement électroniques ;
dans lequel le dispositif est conçu pour exécuter un procédé selon l'une quelconque des revendications précédentes.
